# EUROPEAN PATENT APPLICATION

(11) **EP 3 902 377 A1**
(43) Date of publication of application: **27.10.2021**
(21) Application number: 21168704.1
(22) Date of filing: 15.04.2021
(51) Int. Cl.: H05B 45/20, H05B 47/16, H05B 45/46, H05B 45/50

(54) **LED LIGHTING EQUIPMENT WITH VARIABLE COLOR TEMPERATURE**

(30) Priority: 24.04.2020 IT 202000008902
(71) Applicant: Beghelli S.p.A., 40053 Monteveglio-Valsamoggia (BO) (IT)
(72) Inventor: BEGHELLI, Gian Pietro, 40053 VALSAMOGGIA (BO) (IT)
(74) Representative: Burchielli, Riccardo

(57) **Abstract**

An LED lighting apparatus having a variable color temperature, comprising an electronic module (10), which is interposed between the output of a control unit (11) of a plurality of lighting LEDs (13) and at least two strips (12), having different color temperature and positioned under a lens, each of which contains one or more of said lighting LEDs (13), characterized in that said control unit (11) includes a selector, suitable for cyclically selecting, by means of said electronic module (10), one of the operation modes between a cold light operation mode, an intermediate light operation mode, a warm light operation mode and a default operation mode, in which said two strips (12) of LEDs (13) are switched on at a speed not perceptible to the human eye and below said lens, so that the color temperature varies according to the duty-cycle used and according to the set operation mode.

## Description

The present invention relates, in general, to an LED lighting fixture with variable color temperature; more specifically, the invention relates to a lighting fixture, which, through the combined control of two sets of LED light sources, economically realizes the concept of "Human Centric Lighting", i.e. the possibility of combining visual, biological and emotional effects of light by influencing the well-being and individual performance of people.

The color temperature (measured in Kelvin degrees) is a physical quantity associated with the hue of light, a temperature around 2000K corresponds to the color orange, lower temperature values correspond to red and, even lower, the infrared, no longer visible, while, in ascending order, the light is first white, then blue, violet and ultraviolet.

Therefore the light defined in common use as "hot" (or with shades tending to red-yellow) has actually a lower temperature than the one defined as "cold" (tending to light blue-white); this is due to the fact that the electromagnetic waves responsible for the transmission of heat are actually those with lower frequency, hence the common association of the idea of "hot" to shades of color close to infrared and "cold" to those tending to ultraviolet.

The concept of changing the color of light over time, in order to adapt to human needs, is currently known.

The benefits of recreating artificially (through lighting fixtures, especially LED, with variable color temperature) the natural light present during the time span of a day, in order to provide an adequate lighting to the circadian cycles of man, are also known; in particular, it is known that the lighting must allow a dynamic transition of various lighting scenarios, from morning to day, evening, night, in order to have positive effects, visual, emotional and biological, on human beings in a lasting way.

In fact, with the advent of artificial electric lighting has happened that the classic natural light-dark alternation has been altered; this is because we live for most of our day in indoor environments (offices, schools, businesses, etc..) where we mostly receive inadequate or insufficient light stimuli and because often during the night we receive excessive stimuli (such as the light of television screens, cell phones or PCs).

The alteration of the balance between the biological clock and the day-night cycle can generate potentially negative consequences on people's health, such as various diseases, which may be minor (such as gastro-intestinal and cardiovascular disorders, states of confusion, stress, anxiety, headache and mood and sleep disorders) or more serious (such as depression or some forms of cancer).

In order to overcome these drawbacks, it is still known to install lighting fixtures with a color temperature of about 6500K (natural ambient light) in areas where to perform the maximum physical and intellectual activity (this temperature in fact reproduces the shade of sunlight or natural light of a spring day with clear skies around 12.00), while for relaxation areas one can choose a light source with a warm tone (tending more to the red-orange color), equal to about 2000-3000K; finally, to have a relaxing temperature, but at the same time useful to stay operational (study, reading, work), it is better to opt for a neutral temperature of 4000K.

In addition, a color temperature of about 5000K-6000K is good for commercial environments, factories, warehouses, public places, while a color temperature of about 1700K-2700K is suitable for relaxing areas and interiors with a classic style.

However, lighting fixtures are not used so far to vary continuously the color temperature (i.e. the color of the light itself) depending on the time of day and / or season and / or latitude, as, for this purpose, are generally used centralized systems that synchronize a series of lamps, via bus, according to the programming of a control unit, and not according to a time and / or period of time set.

It is therefore an object of the present invention to realize an LED lighting apparatus with variable color temperature, which allows the color temperature in an environment to be varied continuously and as a function of various parameters, such as time, season and latitude, factory-set and maintained in the product for predetermined times.

It is a further purpose of the invention to provide a variable color temperature LED lighting fixture that is of relatively simple, safe and reliable construction, employing substantially known technologies and relatively inexpensive components, relative to the known prior art and by virtue of the advantages achieved.

These and other purposes, according to the present invention, are achieved by providing a variable color temperature LED lighting apparatus according to the appended claim 1.

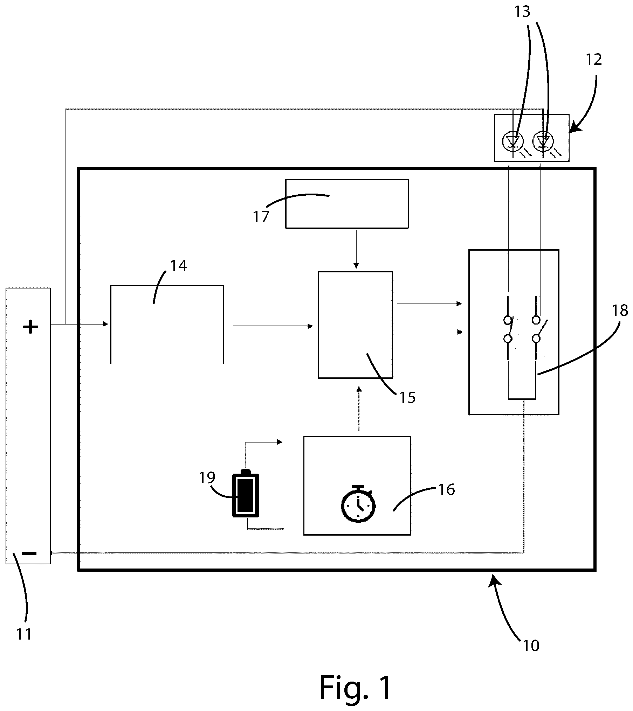

Advantageously, the lighting apparatus according to the invention allows the variation of the color temperature in a room, depending on the time/season/latitude, by means of an internal clock, so that the color temperature of the emitted light, simulating the variation of daylight, is able to generate particularly pleasant illumination conditions; in particular, it is envisaged to diffuse a warm light in the morning, which becomes cooler as the day passes, and then becomes warm again in the evening and at night. The equipment, at low cost, makes it possible to synchronize a series of lamps not according to a control unit, but according to a timetable that is set by the factory and that is maintained in the product for a predefined period of time (for example, 10 years), through the use of a buffer battery. Further purposes and advantages of a variable color temperature LED lighting apparatus according to the present invention will be more apparent from the following description, which is illustrative and not limiting, referring to a preferred embodiment, and according to the accompanying drawing (Figure 1), which shows a block diagram of operation of the LED lighting apparatus, which is the object of the invention.

With reference to the mentioned figure 1, the LED lighting apparatus according to the invention includes an electronic module 10, which is interposed between the output of a control unit 11 of the LEDs and the strips 12 (preferably present in number of two), which contain the lighting LEDs 13.

In particular, the module 10 includes a CPU 15 to which power is supplied via a power supply unit 14 connected to the control unit 11.

The CPU 15 is provided with input signals from a clock 16 internal to the module 10 and from a selector circuit 17, while the CPU 15 provides an output signal to be sent to a dimming unit 18, which determines the color temperature of the equipment by switching the LEDs (13) present in each strip (12). Advantageously, the control unit 11 includes a selector, which is a button of the electronic module 10 (referred to as the "HCL Module"), capable of cyclically selecting one of the operation between a default mode, a cool light mode (at 6500°K), an intermediate light mode (at 4000°K) and a warm light mode (at 2700 °K).

Thus, you can vary the color temperature of the fixture by switching the LEDs 13 (the latter at a fixed temperature).

Always advantageously, the apparatus includes two strips 12 of LEDs 13 with different color temperature (2700 °K and 6500 °K) positioned under a lens and the default mode ("HCL Module") alternates the lighting of the two strips 12 at a speed not perceptible to the human eye (2 Khz) below the lens; the effect is that the temperature varies according to the duty-cycle used (0% = 2700 °K; 100% = 6500 °K) and according to the set operating mode.

According to preferred embodiments of the invention, the electronic module 10 is compatible with an LED control unit 11 having an output voltage of between 30 and 80 volts and a maximum current of 900 mA, although of course higher or lower voltages and currents can be applied.

In practice, the electronic module 10 alternately (and advantageously, at a frequency of 2 kHz) distributes the current on the strips 12 of LEDs 13 with different colors, via the selector circuit 17, the CPU 15 and the dimming unit 18, obtaining the required color according to the season and/or time of day, depending on the signal provided by the clock 16.

The value of 2 kHz is the frequency value above which there are no requirements related to "flicker free" behavior (in the case where the electronic module 10 is coupled to a flicker free control unit 11).

Then, the electronic module 10 allows the variation of the color temperature (i.e. of the color of the light itself) of the lighting LEDs 13 according to the time/season/latitude by means of the internal clock 16.In case of anomaly (for example in case the equipment notices that the time is not programmed, following the possible exhaustion of the battery 19 of the clock 16), the equipment, if it was in default operating mode, automatically switches to the intermediate light operating mode.

In this case, it is also possible to change the mode according to the cyclic sequence of operating modes, but it is no longer possible to select the default mode unless the product is reprogrammed at the factory or the product is replaced.

The operation of the lighting apparatus according to the invention is substantially as follows.

When the lighting LEDs 13 (advantageously placed on a lamp) are turned on, the electronic module 10 allows the date and time to be read and the color of the light from the LEDs 13 to be arranged with respect to a predetermined internal table substantially corresponding to the human circadian cycle.

In this way, it is possible to obtain an artificial illumination more similar to the natural illumination of the current time and/or season.

This improves well-being by obtaining a suitable illumination, without a significant increase in cost, compared to the known art. Furthermore, the apparatus according to the invention does not need to arrange any communication bus between the LEDs and/or the lighting lamps and the control unit, as required in the prior art, and the product can be programmed directly at the factory.

In practice, it has been found that the LED lighting apparatus according to the invention is particularly innovative and advantageous and achieves the intended purposes and advantages.

It is clear from the description that the features of the LED lighting apparatus, which is the object of the present invention, and its advantages are clear.

Finally, it is clear that many other variants can be made to the LED lighting fixture in consideration, without departing from the principles of novelty inherent in the inventive idea as expressed in the appended claims.

## Claims

1. LED lighting fixture having a variable color temperature, comprising an electronic module (10), which is interposed between the output of a control unit (11) of a plurality of lighting LEDs (13) and at least two strips (12), having different color temperature and positioned under a lens, each of which contains one or more of said lighting LEDs (13), wherein said electronic module (10) includes a CPU (15) to which power is supplied by means of a power supply unit (14) connected to said control unit (11) and to whose input are sent signals from a clock (16), internal to said electronic module (10) and provided with a battery (19), and from a selector circuit (17), said CPU (15) being configured to provide in output a signal to be sent to a dimming unit (18), which determines the color temperature of the apparatus by switching the illumination LEDs (13) present in each strip (12), **characterized in that** said control unit (11) includes a selector switch, suitable for cyclically selecting, by means of said electronic module (10), one of the operation between a cold light operation mode, an intermediate light operation mode a warm light operation mode and a default operation mode, in which said two strips (12) of LEDs (13) are alternately lit at a speed not perceivable by the human eye and below said lens, so that the color temperature varies according to the duty-cycle used and according to the set operation mode.

2. Lighting apparatus according to claim 1, **characterized in that** said default mode alternates the lighting of said two strips (12) of LEDs (13) at a frequency of 2 kHz.

3. Lighting equipment according to at least one of the preceding claims, **characterized in that** said electronic module (10) is configured to obtain a color temperature of the equipment according to a signal provided by said clock (16), said signal being relative to a time and/or a season and/or a latitude wherein said lighting equipment is installed.

4. A lighting fixture according to at least one of the preceding claims, **characterized in that** said color temperature is variable with respect to the time, season and/or latitude wherein said lighting fixture is installed and determined according to a predetermined table substantially corresponding to the human circadian cycle.

5. Lighting fixture according to at least one of the preceding claims, **characterized in that** said color temperature of said lighting fixture is programmed directly at the factory.

6. Lighting fixture according to at least one of the preceding claims, **characterized in that**, in the event of a fault, said lighting fixture automatically switches from said default operating mode to said intermediate light operating mode.
